(19) Europäisches Patentamt
European Patent Office
Office européen des brevets

(11) Veröffentlichungsnummer: **0 364 795 B1**

(12) **EUROPÄISCHE PATENTSCHRIFT**

(45) Veröffentlichungstag der Patentschrift: **10.11.93**

(51) Int. Cl.5: **D06P 3/66**, //C09B62/002

(21) Anmeldenummer: **89118137.2**

(22) Anmeldetag: **30.09.89**

(54) **Verfahren zum einphasigen Bedrucken von Cellulosefasern mit Triphendioxazin-Reaktivstoffen.**

(30) Priorität: **05.10.88 DE 3833864**

(43) Veröffentlichungstag der Anmeldung:
**25.04.90 Patentblatt 90/17**

(45) Bekanntmachung des Hinweises auf die Patenterteilung:
**10.11.93 Patentblatt 93/45**

(84) Benannte Vertragsstaaten:
**AT BE CH DE ES FR GB IT LI NL**

(56) Entgegenhaltungen:
**EP-A- 0 144 093**
**EP-A- 0 260 227**

(73) Patentinhaber: **HOECHST AKTIENGESELLSCHAFT**

**D-65926 Frankturt(DE)**

(72) Erfinder: **Pelster, Gerhard**
**Gundelhardtstrasse 2**
**D-6233 Kelkheim(Taunus)(DE)**
Erfinder: **Schidlo, Wolfram, Dr.**
**Nelkenweg 14**
**D-6238 Hofheim am Taunus(DE)**

**EP 0 364 795 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft die Herstellung von farbstarken sowie brillanten Drucken auf aus Cellulosefasern bestehendem oder diese in Mischung mit anderen Fasern enthaltendem Textilmaterial mit faserreaktiven Triphendioxazin-Farbstoffen.

Das einphasige Bedrucken von Cellulosetextilien im Direktdruck mit Reaktivfarbstoffen ist bereits seit geraumer Zeit allgemein bekannter Stand der Technik. Im Gegensatz zu zweiphasigen Druckverfahren, bei denen die Druckfarbe ohne das alkalische Fixierhilfsmittel angesetzt und dieses erst in einem separaten Arbeitsgang, also in einer zweiten Phase, auf die gedruckte sowie getrocknete Ware aufgebracht wird, enthalten die Druckpasten im Falle einphasiger Applikation unmittelbar das zur Fixierung der Reaktivfarbstoffe (auf den bedruckten Cellulosefasern) notwendige Alkali, herkömmlicherweise in Form von Natriumbicarbonat bzw. Soda. Nach dem Druckvorgang und Trocknen werden solche einphasigen Druckerzeugnisse durch Behandlung mit Sattdampf bei 102 - 106 °C fixiert.

Bei den an dieser Stelle zum Bedrucken der Cellulosefasern in Betracht gezogenen Triphendioxazin-Reaktivfarbstoffen handelt es sich ebenfalls um eine in der Praxis geläufige Verbindungsklasse von farbgebenden organischen Substanzen, welche beispielsweise in den publizierten europäischen Patentanmeldungen EP-A-0 234 778, EP-A-0 260 227, EP-A-0 214 093, EP-A-0 158 110, EP-A-0 271 656 u.a.m. beschrieben werden.

Solche alkalisch fixierbaren Blaufarbstoffe, die ihrer Konstitution nach zur Kategorie von mehrkernigen chemischen Produkten mit heterocyclischen Strukturelementen gehören, sind - mit den verschiedenartigsten Reaktivsystemen ausgestattet - im Handel und sollen insbesondere die teuren, heutzutage für diesen Zweck benutzten Farbstoffe auf Anthrachinon-Basis mit der Zeit und wo gängig ersetzen.

Als fasereaktives System am chromophoren Grundkörper dieser wasserlöslichen Farbstoffe kommen sowohl solche Gruppierungen in Frage, welche mit den OH-gruppenhaltigen Bestandteilen des cellulosischen Fasermoleküls nach einem Additionsmechanismus in Reaktion treten, beispielsweise der Vinylsulfonyl-Rest selbst oder ein Vorläufer hierfür (der im alkalischen Medium während des Färbeprozesses zwischenzeitlich eine derartige charakteristische Gruppierung bildet, wie insbesondere die Sulfatoethylsulfonylgruppe u.a.), als auch solche zur Verfügung stehen können, welche sich mit der Fasersubstanz über eine Substitutionsreaktion umsetzen, beispielsweise reaktionsfähige Substituenten von mono- oder dihalogenierten Heterocyclen wie Triazin, Pyrimidin, Chinoxalin u. v. a. (die leicht abspaltbar sind und einen elektrophilen Rest hinterlassen), so daß sie allesamt auf diese Weise eine kovalente Bindung einzugehen in der Lage sind. In dieser Hinsicht sind vor allem solche Abkömmlinge aus der Triphendioxazin-Reihe von Interesse, die eine der vorstehend erläuterten, an einen aromatischen Ring des Chromophors direkt oder über ein kurzkettiges, vorzugsweise aliphatisches Brückenglied gebundene faserreaktiven Gruppierungen einfach oder mehrfach, gegebenenfalls von unterschiedlicher Natur, am gleichen Molekül des Farbstoffes umfassen und in denen im Falle des Vorhandenseins von bisreaktiven Resten mit voneinander unterschiedlicher Bedeutung z. B. eine endständige Vinylsulfonyl-Reaktivgruppe über eine halogenhaltige, heterocyclische Konfiguration mit dem Chromophor des Triphendioxazins verbunden sein kann.

Die für die Durchführung der Drucke zur Anwendung gelangenden Farbmittel sind im COLOUR INDEX, 3. Auflage 1971 sowie Ergänzungen 1975, 1982 und 1987 unter dem Gattungsbegriff "C.I. Reactive Dyes" aufgelistet.

Als Nachteil dieser aufgrund ihrer färberischen Eigenschaften wertvollen Farbstoffe vom Triphendioxazin-Typ (im Falle sämtlicher Zweiphasen-Druckverfahren anwendbar) hat sich jedoch herausgestellt, daß sie sich für fast alle konventionellen Einphasen-Druckverfahren mit Natriumbicarbonat als Fixieralkali nicht eignen, weil sie unter den dabei üblichen Fixierbedingungen unbeständig sind. Das Aussehen der sonst klare Blautöne aufweisenden Farbmusterungen wird dabei zu unansehnlichen, stumpfen Blau- bis Olivtönen verfälscht, was im wesentlichen auf eine alkalische Zerstörung des Chromophors (sowohl des fixierten als auch des unfixierten Farbstoffanteils) während der Dämpfoperation zurückzuführen ist.

Aus der offengelegten europäischen Patentanmeldung EP-A- 0 144 093 ist nun ein Einphasen-Druckverfahren bekannt, gemäß dem anstelle des üblichen Natriumbicarbonats zum Zwecke einer Verbesserung der Lagerstabilität der Druckfarben Natriumacetat als Fixieralkali für Reaktivfarbstoffe eingesetzt wird. Die dabei verwendeten Mengen sollen die 2-fach bis maximal die 6-fache stöchiometrische Menge, bezogen auf je einen faserreaktiven Rest, betragen. Der Austausch des Fixieralkalis soll einer vorzeitigen Inaktivierung des reaktiven Systems in den wasserhaltigen Pasten entgegenwirken; eine technische Lehre in bezug auf die Verhinderung einer Zerstörung des chromophoren Moleküls kann aus dieser Druckschrift nicht hergeleitet werden. Eine Nacharbeitung der dort angegebenen Vorschriften hat jedoch gezeigt, daß bei dieser Arbeitsweise nicht die gleichen Farbausbeuten wie mit Natriumcarbonat erhalten werden, vor allem

wenn es um tiefe Drucke wie Schwarz, Marineblau u.a. geht.

Wie bereits oben geschildert ist es als ein Nachteil der Triphendioxazin-Reaktivfarbstoffe einzuschätzen, daß sie unter den Bedingungen der Bicarbonatfixierung nicht verwendet werden können, weil das Farbstoffmolekül nicht stabil genug ist.

Aufgabe der vorliegenden Erfindung war es also, ein unkompliziertes Einphasen-Druckverfahren zu entwickeln, nach dem diese Triphendioxazin-Reaktivfarbstoffe fixiert werden können, ohne daß ihr Chromophor beeinträchtigt wird, damit sie überhaupt für die einphasige Drucktechnik zugänglich werden. Diese Zielsetzung soll dann einerseits die Erzeugung von klaren Blautönen, wie auch anderseits - in Mischung mit Farbstoffen von unterschiedlicher Struktur sowie abweichender Nuance- von klaren Marineblau- bis entsprechenden Schwarztönen ermöglichen.

In Lösung der zuvor definierten Aufgabe wurde erfindungsgemäß nunmehr gefunden, daß sich solche Triphendioxazin-Reaktivfarbstoffe einwandfrei und ohne Farbtonänderung einphasig auf Cellulosefasern fixieren lassen, wenn man den Druckpasten außer mindestens einem Farbstoff vom obengenannten Typ als alleiniges unter Fixierbedingungen alkalisch wirkendes Hilfsmittel

a) pro Reaktivgruppe des verwendeten Farbstoffes die 10-20fache stöchiometrische Menge an Natriumacetat (berechnet auf das wasserfreie Produkt) oder

b) 20 - 40 g/kg Druckpaste an Natriumtrichloracetat oder

c) eine Mischung aus

20 - 40 g/kg Druckpaste an Natriumtrichloracetat und

15 - 30 g/kg Druckpaste an Natriumacetat-trihydrat

zusetzt und die damit erzeugten Drucke nach dem Trocknen durch Dämpfen mittels Sattdampf bei Temperaturen im Bereich von 102 - 110 °C fixiert.

Bei der Variante a) des Verfahrens wird vorteilhaft auf einen sonst üblichen Zusatz von Harnstoff verzichtet.

Für die Farbstoff-Fixierung nach dem beanspruchten Verfahren sind im allgemeinen Dämpfzeiten von 8 - 15 Minuten ausreichend.

Unter brauchbaren Fasermischungen in bezug auf die Anwendung der neuen Arbeitsweise sind solche aus Cellulose mit synthetischen Fasern, in erster Linie Polyesterfasern zu verstehen.

Die vorstehend erläuterte Einphasen-Drucktechnik erlaubt es nun, Triphendioxazin-Reaktivfarbstoffe ohne Farbtiefenverlust und ohne Farbtonänderung als Typfarbstoffe für klare Blautöne einzusetzen oder in Mischung mit Reaktivfarbstoffen von andersartigem strukturellen Aufbauprinzip als Basis für die Nuancen Marineblau oder Schwarz zu benutzen. Daneben können Reaktivfarbstoffe nach der üblichen einphasigen Verfahrensweise mittels Natriumbicarbonat als Fixieralkali gedruckt werden, da ja die Fixierbedingungen im Dampf in beiden Fällen die gleichen sind.

Von den üblichen Verfahren zur Herstellung von Einphasen-Drucken unterscheidet sich das Verfahren nach der Erfindung lediglich dadurch, daß Triphendioxazin-Reaktivfarbstoffe enthaltende Druckpasten anstatt mit Natriumbicarbonat als Fixieralkali mit den erfindungsgemäß bezeichneten Chemikalien und Chemikalienmengen angesetzt werden.

Das erfindungsmäßige Vorgehen stellt außerdem die Stabilität der Drucke beim Trocknen und eventuell anschließenden Lagern der bedruckten Partien vor der Fixierung sicher.

Die nachfolgenden Beispiele sollen die Erfindung in Gegenüberstellung zu dem bisherigen Verfahren erläutern.

Die Farbstoffe werden dabei in handelsüblicher Aufmachung und Konzentration verwendet.

Beispiel 1

(A) Bisheriges Verfahren mit Natriumbicarbonat

Man bedruckt ein mercerisiertes Baumwollgewebe mit einer Druckpaste, welche durch inniges Verrühren der unten angegebenen Bestandteile bei Raumtemperatur hergestellt worden ist:

**40 g des blauen Reaktivfarbstoffes der Formel**

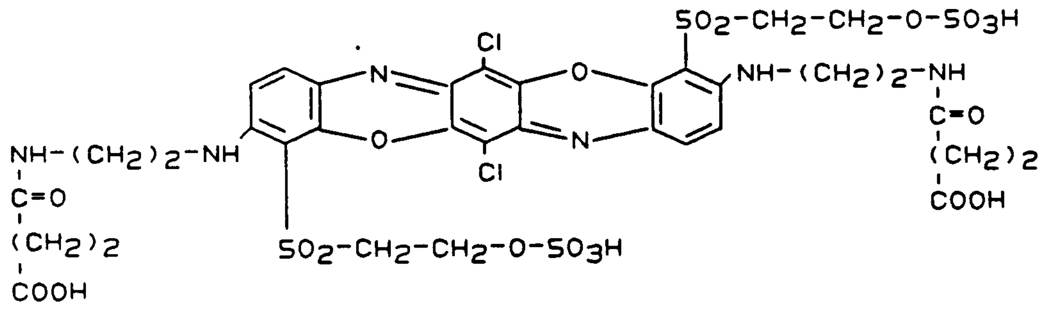

**100 g Harnstoff**

**250 g Wasser**

**450 g einer mittelviskosen Alginatverdickung (7 %ig)**

**25 g Natriumbicarbonat**

**50 g Na-Salz der m-Nitrobenzoesäure (als wäßrige Lösung 1:4)**

**85 g Ausgleich (Wasser oder Verdickung)**

**1.000 g**

und trocknet es 5 Minuten bei 100 °C. Zur Fixierung des aufgedruckten Farbstoffes wird je ein Gewebeabschnitt der behandelten Ware 8, 12 oder 24 Minuten bei 105 °C gedämpft, danach mit Wasser gespült, neutral geseift und schließlich fertiggestellt.

Man erhält blaue Drucke, bei denen mit fortschreitender Dämpfzeit der Farbstoff weniger oder mehr zerstört ist. Bereits der 8 Minuten lang gedämpfte Druck hat mit dem sonst (bei Anwendung anderer Applikationstechniken) zu erwartenden Farbton nichts mehr zu tun und ist völlig unbrauchbar.

(B) Erfindungsgemäßes Verfahren

Anstelle der unter Vorschrift A erwähnten 25 g/kg Natriumbicarbonat enthält die dort angegebene Druckpaste hier 47 g/kg Natriumacetat 3 $H_2O$ und keinen Harnstoff, dafür aber 163 g/kg Ausgleich. Sonst wird bei der Herstellung der Drucke samt Fixierung vollständig gleich verfahren.

Man erhält in allen 3 Fällen volle, klare Blau-Drucke ohne Farbtonbeeinträchtigung.

Beispiel 2

Man bedruckt ein laugiertes Zellwollgewebe mit einer Druckpaste enthaltend:

20 g des blauen Reaktivfarbstoffes der Formel

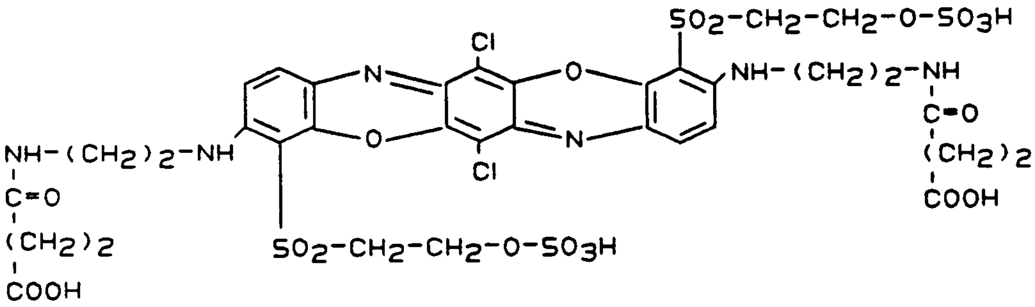

15 g des Disazo-Farbstoffes Reactive Black 5 mit der C.I.-Nr. 20505

5 g des roten Reaktivfarbstoffes der Formel

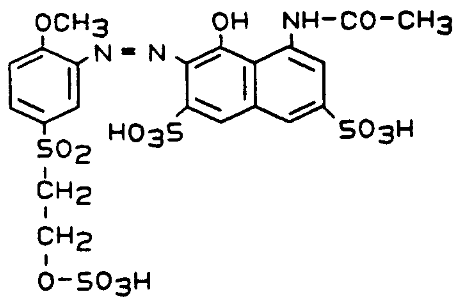

| | |
|---|---|
| 250 g | Wasser |
| 50 g | Na-Salz der m-Nitrobenzoesäure (als wäßrige Lösung 1:4) |
| 50 g | Natriumacetat · 3 $H_2O$ |
| 500 g | einer mittelviskosen Alginatverdickung (7 %ig) |
| 110 g | Ausgleich (Wasser oder Verdickung) |
| 1.000 g | |

trocknet die bedruckte Ware bei 100 °C und dämpft dieselbe sodann zur Farbstoff-Fixierung 10 Minuten bei 103 °C. Danach wird das so behandelte Gewebe mit Wasser neutral geseift sowie fertigestellt. Man erhält einen kräftigen Marineblau-Druck.

Setzt man obiger Druckpaste versuchsweise 20 g/kg Natriumcarbonat zu und verfährt sonst wie vorstehend angegeben, dann erhält man als Druckmuster auf der Ware bloß einen rotstichigen Anthrazitton, weil durch dieses Fixieralkali die benutzte Triphendioxazin-Blaukomponente zerstört worden ist.

Beispiel 3

Für die Herstellung der Druckmuster werden der Druckpaste aus Beispiel 2 anstelle von 50 g/kg Natriumacetat • 3 $H_2O$ hier
80 g/kg Natriumtrichloracetat (als wäßrige Lösung 1:1) sowie
100 g/kg Harnstoff
zugesetzt (die Gesamtmenge an Wasser einschließlich Ausgleich beträgt dann nur noch 230 g/kg), und es wird sonst verfahren wie dort erläutert worden ist.

Man erhält einen Marineblau-Druck mit gleicher Farbausbeute wie in Beispiel 2.

Auch hier führt ein Zusatz von Bicarbonat zur Zerstörung des Blauanteils der Druckfarbe.

Beispiel 4

Man bedruckt ein mercerisiertes Baumwollgewebe mit einer Druckpaste, die folgende Bestandteile enthält:

18 g des blauen Reaktivfarbstoffes der Formel

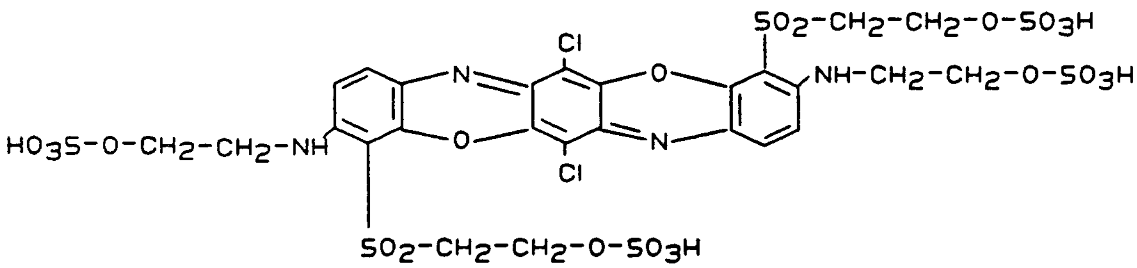

14 g des Disazo-Farbstoffes Reactive Black 5 mit der C.I.-Nr. 20505

6 g des gelben Reaktivfarbstoffes der Formel

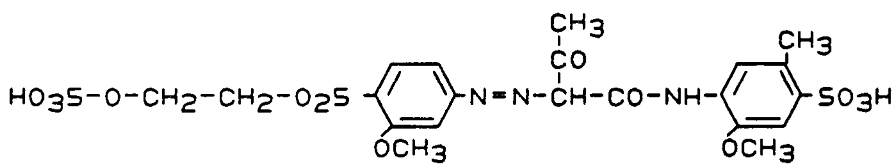

100 g Harnstoff
250 g Wasser
50 g Na-Salz der m-Nitrobenzoesäure (als wäßrige Lösung 1:4)
60 g Natriumtrichloracetat (als wäßrige Lösung 1:1)
20 g Natriumacetat · 3 $H_2O$
450 g Verdickung (wie Beispiel 1)
32 g Ausgleich (Wasser oder Verdickung)

1.000 g

trocknet die so behandelte Ware, fixiert den Farbstoff durch Dämpfen während 8 Minuten bei 105 °C und stellt den Druck wie in den vorangegangenen Beispielen fertig. Man erhält einen Marineblau-Druck.

Wiederholt man den Druck mit derselben Druckpaste nach einer Woche, so erhält man nach dem Dämpfen, Auswaschen und Seifen dasselbe Druckergebnis ohne Farbtiefeneinbuße oder Farbtonänderung.

Beispiel 5

Zur Durchführung der Druckoperation enthalten die Druckpasten gemäß Beispiel 1A und 1B anstelle des dort verwendeten Farbstoffes mit Vinylsulfonyl-Reaktivgruppen hier den blauen Reaktivfarbstoff nachstehender Formel

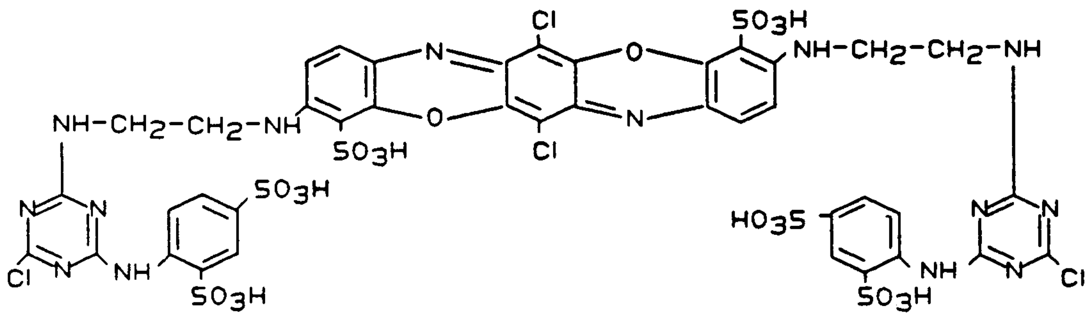

Die jeweiligen Druckmuster werden genauso wie in Beispiel 1A bzw. 1B gedruckt, getrocknet, gedämpft und nachbehandelt.

Man erhält nach der Varinate A unbrauchbare Drucke, infolge teilweiser oder gänzlicher Zerstörung des Chromophors.

Nach Variante B aber erzielt man jedoch einen klaren kräftigen Blaudruck mit guten Echtheitseigenschaften.

## Patentansprüche

**1.** Verfahren zum einphasigen Bedrucken von aus Cellulosefasern bestehendem oder diese in Mischung mit anderen Fasern enthaltendem Textilmaterial mit faserreaktiven Triphendioxazin-Farbstoffen, dadurch gekennzeichnet, daß man den Druckpasten außer mindestens einem Farbstoff vom obengenannten Typ als alleiniges unter Fixierbedingungen alkalisch wirkendes Hilfsmittel
a) pro Reaktivgruppe des verwendeten Farbstoffes die 10 - 20fache stöchiometrische Menge an Natriumacetat (berechnet auf das wasserfreie Produkt) oder
b) 20 - 40 g/kg Druckpaste an Natriumtrichloracetat oder
c) eine Mischung aus
20 - 40 g/kg Druckpaste an Natriumtrichloracetat und
15 - 30 g/kg Druckpaste an Natriumacetat-trihydrat
zusetzt und die damit erzeugten Drucke nach dem Trocknen durch Dämpfen mittels Sattdampf bei Temperaturen im Bereich von 102 - 110 °C fixiert.

**2.** Verfahren nach Anspruch 1, dadurch gekennzeichnet, daß die Druckpasten mit Natriumacetat nach Variante a) zusätzlich keinen Harnstoff enthalten.

**3.** Verfahren nach den Ansprüchen 1 und 2, dadurch gekennzeichnet, daß die getrockneten Drucke zur Farbstoff-Fixierung 8 - 15 Minuten gedämpft werden.

## Claims

**1.** A process for the single-step printing of textile material which consists of cellulose fibers or contains cellulose fibers blends with other fibers with fiber-reactive triphendioxazine dyes, which comprises adding to the print pastes apart from at least one dye of the abovementioned type as the sole fixing alkali
a) per reactive group of the dye used from 10 to 20 times the stoichiometric amount of sodium acetate (calculated on the anhydrous product) or

b) 20-40 g of sodium trichloroacetate per kg of print paste or

c) a mixture of 20-40 g of sodium trichloroacetate per kg of print paste and 15-30 g of sodium acetate trihydrate per kg of print paste

and fixing the prints produced therewith, after drying, by steaming with saturated steam at temperatures within the range of 102-110 ° C.

**2.** The process as claimed in claim 1, wherein the sodium acetate print pastes of variant a) do not contain any urea in addition.

**3.** The process as claimed in claims 1, and 2, wherein the dried prints are steamed for 8-15 minutes to fix the dye.

**Revendications**

**1.** Procédé pour imprimer en une seule phase une matière textile consistant en des fibres cellulosiques ou contenant des fibres cellulosiques en mélange avec d'autres fibres, à l'aide de colorants de la série de la triphénodioxazine, réactifs à l'égard des fibres ("colorants réactifs"), procédé caractérisé en ce qu'on ajoute aux pâtes d'impression, en plus d'au moins un colorant du type précité, comme seul adjuvant à action alcaline dans les conditions de fixation,

(a) par groupe réactif du colorant utilisé, la quantité représentant 10 à 20 fois la quantité stoéchiométrique d'acétate de sodium (calculée sur le produit anhydre), ou

(b) 20 à 40 grammes de trichloracétate de sodium par kilogramme de pâte d'impression , ou

(c) un mélange de

20 à 40 grammes de trichloractétate de sodium par kilogramme de pâte d'impresion, et

15 à 30 grammes d'acétate de sodium trihydraté par kilogramme de pâte,

et l'on soumet les impressions ainsi obtenues, après leur séchage, à fixation, par vaporisage à l'aide de vapeur saturée, à des températures se situant entre 102 et 110 ° C.

**2.** Procédé selon la revendication 1, caractérisé en ce que les pâtes d'impression ne contiennent, avec l'acétate de sodium selon la variante (a), absolument pas d'urée en supplément.

**3.** Procédé selon les revendications 1 et 2, caractérisé en ce que les impressions séchées sont soumises à 8 à 15 minutes de vaporisage pour fixation du colorant.